# EUROPÄISCHE PATENTSCHRIFT

(11) **EP 1 219 800 B1**
(45) Veröffentlichungstag und Bekanntmachung des Hinweises auf die Patenterteilung: **07.10.2009**
(21) Anmeldenummer: 01128785.1
(22) Anmeldetag: 04.12.2001
(51) Int. Cl.: F02C 3/34, F02C 3/04

(54) **Gasturbinenzyklus**
Gas turbine cycle
Cycle de turbine à gaz

(30) Priorität: 22.12.2000 DE 10064270
(43) Veröffentlichungstag der Anmeldung: 03.07.2002
(73) Patentinhaber: Alstom Technology Ltd, 5400 Baden (CH)
(72) Erfinder: Frutschi, Hans Ulrich, Dr., 5223 Riniken (CH)

(56) Entgegenhaltungen:
- DE-A1- 4 303 174
- US-A- 3 736 745
- US-A- 4 498 289

## Beschreibung

### Technisches Gebiet

Die Erfindung bezieht sich auf ein Verfahren zum Betrieb einer Gasturbinenanlage mit CO₂ als Arbeitsmittel, bei dem in wenigstens einer Brennkammer Kohlenwasserstoffe in einer mit Sauerstoff angereicherten CO₂-Atmosphäre zu Rauchgasen, die vorwiegend aus CO₂ und H₂O bestehen, verbrannt werden, die innerhalb wenigstens einer der Brennkammer nachgeordneten Turbinenstufe expandiert, anschließend in einer Verdichterstufe komprimiert und in einem nachgeordneten Kondensator zumindest teilweise kondensiert werden, so dass zumindest Teile des CO₂ und H₂O verflüssigt und teilweise zusammen mit nichtkondensierten Rauchgasbestandteilen abgeführt werden und dass ein nicht abgeführter Hauptanteil flüssigen CO₂ mittels einer Pumpeneinheit komprimiert, in wenigstens einer Rekuperatorstufe vorgewärmt und der Brennkammer erneut zugeführt wird.

### Stand der Technik

Gasturbinenanlagen mit innerer Verbrennung und einem quasi geschlossenen Kreislauf für CO₂ als Arbeitsmittel stellen Beispiele für eine vielversprechende umweltschonende Technik zur Energiegewinnung bzw. -umsetzung dar. Im Unterschied zu konventionellen Gasturbinenanlagen zur Energiegewinnung, in denen fossile Brennstoffe genutzt und große Mengen an CO₂-Mengen freigesetzt werden, vermögen Gasturbinenanlagen mit einem quasi geschlossenen CO₂-Kreislauf die durch die Verbrennung kohlenstoffhaltiger Brennstoffe in Luftsauerstoff verursachten CO₂ - Emissionen sowie Stickoxidemissionen erheblich zu reduzieren. So werden in an sich bekannter Weise die beim Verbrennungsvorgang entstehenden Rauchgase abgekühlt und durch Rezirkulation dem Ansaugbereich der Gasturbinenanlage mit anschließender innerer Verbrennung erneut zugeführt. Eine derartige Rezirkulation, vorwiegend von CO₂, das durch den Verbrennungsvorgang entstanden ist, kann jedoch lediglich zu jenem Maße geschehen, zu dem auch der innerhalb des Verbrennungsvorganges vorhandene Luftsauerstoff aufgebraucht worden ist. Wird der Verbrennungsvorgang mit Luftsauerstoff genährt, so bleiben die bei einer Verbrennung entstehenden Rauchgase mit Luftstickstoff vermischt, wodurch jedoch das CO₂-Abscheidungsproblem nur marginal verkleinert werden kann, zumal in diesem Fall in den entstehenden Rauchgasen das CO₂ mit Stickoxiden vermischt ist und schwerer aus dem Kreislauf isoliert werden kann.

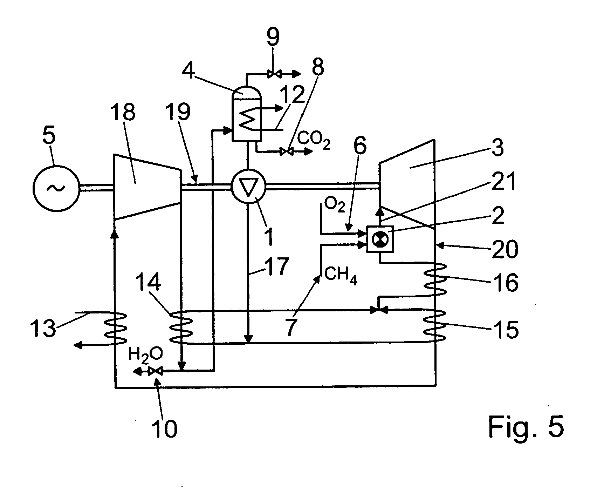

Um das vorstehend genannte Stickstoffproblem bei gleichzeitiger umweltschonender Beseitigung von CO₂ zu lösen, ist eine Gasturbinenanlage mit einem CO₂-Prozess vorgeschlagen worden, die in Fig. 5 schematisiert dargestellt ist. Der in Fig. 5 dargestellte quasi geschlossene, mit CO₂ aufgeladene Gasturbinenprozess weist eine Brennkammer 2 auf, in der fossiler Brennstoff, bspw. Erdgas (CH₄) über die Zuleitung 6 unter ausschließlicher Zugabe reinen Sauerstoffs (O₂) über die Zuleitung 7 verbrannt wird. Da ausschließlich reiner Sauerstoff O₂ als Oxidator verwendet und kein Luftsauerstoff verbrannt wird, treten infolgedessen keine Stickstoffverbindungen im weiteren Verbrennungszyklus auf. Die aus der Brennkammer 2 austretenden Rauchgase 21 treiben eine Gasturbine 3 an, die über eine Welle 19 mit einem Generator 5 zur Stromerzeugung verbunden ist. Die innerhalb der Gasturbine 3 expandierenden Rauchgase 21 treten als Abgase 20 aus der Gasturbine 3 aus und gelangen über einen extern kühlenden Wärmetauscher 13 unmittelbar in einen Verdichter 18, in dem sie komprimiert werden und nach Austritt aus dem Verdichter 18 einem Kondensator 4 zugeführt werden. Der Verdichter 18 ist in dem in Fig. 5 gezeigten Ausführungsbeispiel auf der gemeinsamen Welle 19 mit der Turbine 3 sowie dem Generator 5 angeordnet. Vor Eintritt der durch den Verdichter 18 verdichteten Abgase in den Kondensator 4 erfolgt ein rekuperativer Wärmeentzug mittels eines Wärmetauschers 14, so dass innerhalb des Kondensators 4 der Kondensationspunkt von CO₂ unterschritten wird, wodurch das komprimierte und abgekühlte CO₂ in den flüssigen Zustand übergeht. Optional kann über ein Regelventil 10 Wasser am Kondensationspunkt abgezweigt werden. Aus dem einen Wärmetauscher 12 aufweisenden Kondensator 4 werden zum einen nicht kondensierte Gasanteile über ein Regelventil 9 aus dem Kreisprozess entnommen, zum anderen wird über ein Regelventil 8 ein Teilstrom des verflüssigten CO₂ abgezogen. Durch die geregelte Abzapfung von CO₂ aus dem Kreislauf kann überdies der Aufladungsgrad und damit die Leistung des Kreisprozesses geregelt werden. Unter Umweltgesichtspunkten kann durch Aufkondensierung des aus dem Prozess ausgeschiedenen CO₂ jener Aggregatszustand dieses Gases hergestellt werden, bei dem sich das anfallende CO₂ unter umweltschonenden Gesichtspunkten, insbesondere was die Treibhausproblematik betrifft, leicht entsorgen lässt.

Der nicht abgezweigte, verflüssigte Hauptanteil von CO₂ wird über eine Pumpe 1 komprimiert und über eine Leitung 17 nach Durchtritt diverser Rekuperatorstufen 14, 15 und 16 in entsprechend vorgewärmter und verdichteter Form der Brennkammer 2 erneut zugeführt.

Um den vorstehend beschriebenen quasi in sich geschlossenen CO₂-Prozess mit technisch vernünftigen Wirkungsgraden betreiben zu können, ist es zweckmäßig eine vollständige Kondensation des gesamten CO₂ zu gewährleisten. Um die flüssige Phase von CO₂ im Kondensator 4 herstellen zu können, müssen in der Verbindungsleitung zwischen dem Verdichter 18 und dem Kondensator 4 Druckbedingungen zwischen 60 und 70 bar herrschen. Ein derart hoher Ausgangsdruck am Kondensationsbeginn des CO₂ vor Eintritt in den Kondensator 4 führt jedoch im Wege der nach dem Kondensator 4 nachgeschalteten Kompression durch die Pumpe 1 zu einem oberen Kreislaufdruck von 250 bis 300 bar. Ein derartig hohes Druckniveau ist jedoch innerhalb der Brennkammer angesichts der dort herrschenden sehr hohen Verbrennungstemperaturen nicht zulässig.

Eine Verbesserung hinsichtlich des Brennkammerdrucks kann gemäss US 4498289, welches dem Oberbegriff der unabhängigen Ansprüche offenbart, dadurch herbeigeführt werden, dass, eine zweite Turbinenstufe angeordnet wird, , in der der Hauptanteil des CO₂ zunächst auf einen Verbrennungsdruck vorexpandiert und anschliessend der Brennkammer zugeführt wird. Die Vorexpansion führt zu einer erheblichen Druckentlastung, so dass eine derartige Prozessführung die Einsatzbedingungen für die Brennkammer verbessert bzw. überhaupt erst zulässige Bedingungen für deren Betrieb ermöglicht. Allerdings hat eine solche Vorexpansion erhebliche Auswirkungen auf die Auslegung des Rekuperators.
Ein weiteres Problem beim Betrieb vorstehend genannter Gasturbinenanlagen stellt die überaus hohe Wärmekapazität von hochgespanntem CO₂ dar, die bei steigenden Druckbedingungen ebenfalls ansteigt. So reichen selbst die drei in Fig. 5 dargestellten rekuperativ wirkenden Wärmetauscher 14, 15 und 16 für den CO₂-Strom nicht aus, um das CO₂ vor Eintritt in die Brennkammer auf eine entsprechende Vorwärmtemperatur zu erwärmen.

### Darstellung der Erfindung

Es besteht daher die Aufgabe, ein Verfahren zum Betrieb einer Gasturbinenanlage mit CO₂ als Arbeitsmittel sowie eine diesbezügliche Gasturbinenanlage der vorstehend genannten Gattung derart weiterzubilden, dass der Wirkungsgrad und die damit verbundenen Prozessparameter innerhalb des quasi geschlossenen CO₂-Kreislaufes optimiert werden.

Die Lösungen der der Erfindung zugrunde liegenden Aufgabe sind in dem unabhängigen Anspruch 1, der ein Verfahren beschreibt, sowie in dem unabhängigen Anspruch 8 angegeben, der eine diesbezügliche Gasturbinenanlage zum Gegenstand hat. Den Erfindungsgedanken vorteilhaft weiterbildende Merkmale sind Gegenstand der abhängigen Ansprüche sowie der Beschreibung, insbesondere unter Bezugnahme auf die Ausführungsbeispiele mit Figuren.

Erfindungsgemäß ist ein Verfahren zum Betrieb einer Gasturbinenanlage mit CO₂ als Arbeitsmittel, bei dem in wenigstens einer Brennkammer Kohlenwasserstoffe in einer mit Sauerstoff angereicherten CO₂-Atmosphäre zu Rauchgasen, die vorwiegend aus CO₂ und H₂O bestehen, verbrannt werden, die innerhalb wenigstens einer der Brennkammer nachgeordneten Turbinenstufe expandiert und anschließend in einer Verdichterstufe komprimiert sowie in einem nachgeordneten Kondensator zumindest teilweise kondensiert werden, so dass zumindest Teile des CO₂ und H₂0 verflüssigt und teilweise zusammen mit nichtkondensierten Rauchgasbestandteilen abgeführt werden und dass ein nichtabgeführter Hauptanteil flüssigen CO₂ mittels einer Pumpeneinheit komprimiert, in wenigstens einer Rekuperatorstufe vorgewärmt, auf einen Verbrennungsdruck vorexpandiert und schließlich der Brennkammer erneut zugeführt wird, derart weitergebildet, dass der Verbrennungsdruck zwischen 70 bar und 100 bar beträgt.

Durch die erfindungsgemäße Maßnahme der Vorexpansion des durch die Pumpeneinheit komprimierten Hauptanteils CO₂ auf Druckwerte zwischen 70 bar bis 100 bar wird ein sicherer und effizienter Betrieb der Brennkammer gewährleistet.

Die Druckreduzierung erfolgt in an sich bekannter Weise mit Hilfe einer Turbinenstufe innerhalb des quasi geschlossenen CO₂-Kreislaufes, die der Pumpeneinheit nachgeordnet ist und ein wirkungsvolles Entspannen der CO₂-Gase vor Eintritt in die Brennkammer bewirkt.

Die zusätzliche Turbinenstufe ist vorzugsweise im CO₂-Kreislauf unmittelbar stromauf zur Brennkammer angeordnet und sorgt dort für die gewünschte Druckreduzierung. Zwischen der Pumpeneinheit und der vorstehend skizzierten Anordnung der Turbinenstufe ist ein dreistufiger Rekuperator vorgesehen, der die durch die Pumpeneinheit komprimierten CO₂-Gase auf eine, für die Verbrennung gewünschte Temperatur vorwärmt. Hierzu dienen Rekuperatorstufen, die für einen gezielten Wärmeübergang von den unmittelbar aus der der Brennkammer nachgeordneten Turbinenstufe expandiert austretenden heissen Abgasen und/oder von den aus der Verdichterstufe vor Eintritt in den Kondensator austretenden warmen CO₂ -Gasen auf die zur Vorexpansion in die weitere Turbinenstufe eintretenden CO₂-Gase sorgen.

### Kurze Beschreibung der Erfindung

Die Erfindung wird nachstehend ohne Beschränkung des allgemeinen Erfindungsgedankens anhand von Ausführungsbeispielen unter Bezugnahme auf die Zeichnungen exemplarisch beschrieben. Es zeigen:
- Fig. 1: einen schematisierten CO₂-Kreislauf mit einer Rekuperatorstufe, wie an sich benannt,
- Fig. 2: T/S-Diagramm zum vorstehend beschriebenen Kreislauf,
- Fig. 3: CO₂-Kreislauf mit dreistufiger Rekuperatoreinheit,
- Fig. 4: T/S-Diagramm zu vorstehendem quasi geschlossenem Kreislauf, sowie
- Fig. 5: Stand der Technik zu quasi geschlossenem CO₂-Kreislauf.

### Wege zur Ausführung der Erfindung, gewerbliche Anwendbarkeit

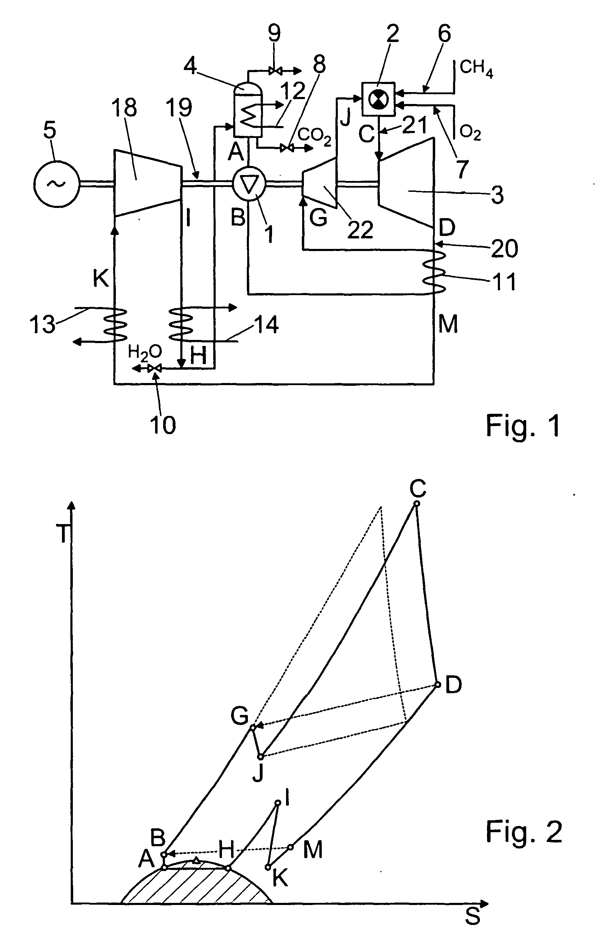

In Fig. 1 ist ein schematisiert dargestelltes Kreislaufschema zu einem quasi geschlossenen CO₂-Kreislauf dargestellt, der im wesentlichen einen vergleichbar ähnlichen Aufbau vorsieht, wie der zum Stand der Technik unter Bezugnahme auf Fig. 5 bzw. US 4498289 beschriebene CO₂-Kreislauf. Um Wiederholungen zu vermeiden, weisen die in Fig. 1 verwendeten Bezugszeichen auf gleichnamige Bauteile hin, die bereits in Bezug auf Fig. 5 eingeführt und beschrieben worden sind. Neuer Bestandteil der in Fig. 1 dargestellten Gasturbinenanlage gegenüber Fig. 5 ist die weitere Turbinenstufe 22, die im quasi geschlossenen CO₂-Kreislauf zwischen der Pumpeneinheit 1 und der Brennkammer 2 zwischengeschaltet ist. Die auf hohem Druck komprimierten CO₂-Gase nach Austritt aus der Pumpeneinheit 1 werden durch eine Wärmetauschereinheit 11 geleitet, in der sie durch thermische Kopplung an die heißen, aus der Turbinenstufe 3 austretenden Abgase zusätzlich erwärmt werden, bevor sie in die zweite Turbinenstufe 22 zur Expansion eintreten. Die durch die Turbinenstufe 22 expandierten CO₂-Gase gelangen anschließend mit einem Druck zwischen 70 bar und 100 bar in die Brennkammer 2, in der sie einer weiteren Verbrennung zur Verfügung stehen.

Die in Fig. 1 dargestellte Anordnung der Maschinengruppe kann, wie dargestellt, einwellig ausgebildet sein, das heisst eine gemeinsame Anordnung der Turbinenstufe 3, der weiteren Turbinenstufe 22, der Pumpeneinheit 1, der Verdichterstufe 18 sowie des Generators 5 auf einer einzigen Welle 19. Alternativ dazu ist es jedoch auch möglich, die Turbinenstufe 3, den Verdichter 18 sowie den Generator 5 bzw. eine anderweitig anzutreibende Last auf einer gemeinsamen Welle anzuordnen. Auf einer separaten Welle könnte ferner die Turbine 22 mit der Pumpeneinheit 1 gekoppelt sein, wobei auf der separaten Welle, die vorzugsweise mit freier Drehzahl rotiert, auch noch eine weitere Last untergebracht sein könnte, beispielsweise eine über Umrichter gekoppelte elektrische Maschine.

In Fig. 2 ist ein T/S-Diagramm dargestellt, das die thermodynamischen Eigenschaften des in Fig. 1 dargestellten CO₂-Kreislaufes verdeutlicht. Die innerhalb des Diagramms mit den Buchstaben A, B, C, D, K, I, H, J und M bezeichneten Positionen bezeichnen Arbeitspunkte, die denjenigen in der Figur 1 bezeichneten Punkten entsprechen. Eine charakteristische Größe stellt bspw. der Expansionsschritt G-J dar, der zum einen zu einer Temperaturabnahme und zugleich zu einer Druckreduzierung führt, wodurch der nachfolgende Verbrennungsvorgang J-C in technisch zulässigen Bereichsgrenzen durchzuführen ist. Der in Fig. 2 strichliert eingezeichnete Prozessverlauf gibt einen Verbrennungsvorgang wieder, der, wie in Fig. 5 dargestellt, keine dem Verbrennungsprozess vorgeschaltete Expansion vorsieht. Man sieht deutlich, dass mit der erfindungsgemäßen Vorexpansion zwar ähnlich hohe Verbrennungstemperaturen erreichbar sind, wie mit der konventionellen Anlage gemäß Fig. 5, jedoch bei wesentlich tieferem Druck.

Ein wesentlicher Punkt bei der Realisierung eines quasi geschlossenen CO₂-Kreislaufes mit einem technisch annehmbarem Wirkungsgrad ist das Erreichen des Kondensationsbeginnes von CO₂ vor Eintritt in den Kondensator 4. Der Kondensationsbeginn ist durch den Arbeitspunkt H definiert, der im T/S-Diagramm ein Punkt der Hüllkurve ist, die den verflüssigten Zustand von CO₂ (schraffierter Bereich) begrenzt. Insbesondere wird der Kondensationsbeginn H über die Vorkompression K-I in der unterkritischen Gasphase mit anschließender Zwischenkühlung I-H erreicht. Auf diese Weise ist es möglich, den Anteil des Druckverhältnisses zwischen B und A, das heisst den durch die Pumpeneinheit 1 erzeugten Druckanstieg, am Totaldruckverhältnis B/K erheblich zu reduzieren.

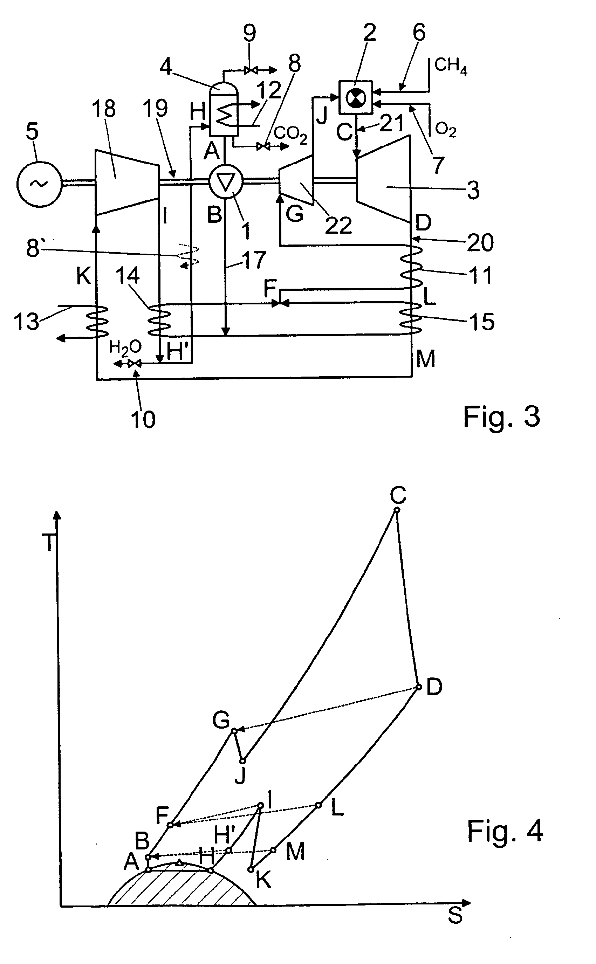

In Fig. 1 besteht die Rekuperatorvorwärmung der aus der Pumpeneinheit 1 austretenden CO₂-Gase vor Eintritt in die Turbinenstufe 22 lediglich aus einem einstufigen Rekuperator 11, dessen Vorwärmleistung aufgrund der hohen Druckverhältnisse und der damit verbundenen hohen Wärmekapazität des hochgespannten CO₂ nur begrenzt ist. Um das im Punkt G, das heisst vor Eintritt in die Turbinenstufe 22 herrschende Temperaturdefizit wirksam zu verringern, sieht der in Fig. 3 dargestellte CO₂-Kreislauf eine dreistufige Rekuperatoreinheit vor, bestehend aus drei Wärmetauschern 11, 14 und 15.

So vermag der Wärmetauscher 14 einen Teilstrom des von der Pumpeneinheit 1 kommenden CO₂-Gasstromes durch die Abwärme I-H' vorzuwärmen.
Der andere Teilstrom des von der Pumpeneinheit 1 kommenden CO₂-Stromes erfährt seine Vorwärmung durch die Wärme L-M in einem parallel zum Wärmetauscher 14 angeordneten Wärmetauscher 15. Die Temperatur in Punkt F stellt sich somit als Mischwert beider Vorwärmungen ein.

Nachdem durch den Temperaturanstieg der CO₂-Gase im Punkt F die Diskrepanz der spezifischen Wärmen zwischen der Niederdruck- und der Hochdruckseite immer geringer wird, kann die weitere Vorwärmung von F nach G in einem einzigen Wärmetauscher 11 erfolgen, der die Wärmeenergie zwischen D und L nutzt.

Durch diese rekuperative Maßnahme erfährt der Punkt G des Kreislaufes gemäß Fig. 3 und 4 ein höheres Temperaturniveau als jener des Kreislaufes gemäß Fig. 1 und 2, was zu einem besseren Wirkungsgrad des Gesamtprozesses führt.

In vorteilhafter Ergänzung kann im Niederdruckbereich des CO₂-Kreislaufes unmittelbar vor Eintritt in den Kondensator 4 ein zusätzlicher Zwischenkühler 8' vorgesehen sein, der die von den vorstehend genannten Wärmetauschern nicht abführbare Wärme zum Erreichen des Kondensationsbeginns von CO₂ im Punkt H zusätzliche Wärme abführt. Zum Zweck der Minimierung der Leistungsaufnahme des Verdichters 18 ist ein Vorkühler 13 vorgesehen.

Schließlich ist es zur Vermeidung von Überhitzungen innerhalb der Turbinenstufe 3 bei Auftreten von zu hohen Verbrennungstemperaturen innerhalb der Brennkammer möglich, zusätzliches CO₂ in den Kreislauf zwischen Brennkammer und Turbinenstufe zu Kühlzwecken einzudüsen, das vorzugsweise aus einer Stelle des CO₂-Kreislaufes entnommen wird, an dem die CO₂-Temperaturen entsprechend niedrig sind.

### Bezugszeichenliste

- 1: Pumpeneinheit
- 2: Brennkammer
- 3: Turbinenstufe
- 4: Kondensator
- 5: Generator
- 6: Leitung für CH₄
- 7: Leitung für O₂
- 8,9,10: Ventil
- 8': Kühlereinheit
- 11,12,13, 14,15: Wärmetauscher
- 17: Leitung nach Pumpe 1
- 18: Verdichter
- 19: Welle
- 20: Abgase
- 21: Heissgase
- 22: Turbinenstufe
- ABC...: Zustandspunkte im T/S-Diagramm von CO₂

## Patentansprüche

1. Verfahren zum Betrieb einer Gasturbinenanlage mit CO₂ als Arbeitsmittel, bei dem in wenigstens einer Brennkammer (2) Kohlenwasserstoffe in einer mit Sauerstoff angereicherten CO₂-Atmosphäre zu Rauchgasen (21), die vorwiegend aus CO₂ und H₂O bestehen, verbrannt werden, die innerhalb wenigstens einer der Brennkammer (2) nachgeordneten Turbinenstufe (3) expandiert, anschließend in einer Verdichterstufe (18) komprimiert und in einem nachgeordneten Kondensator (4) zumindest teilweise kondensiert werden, so dass zumindest Teile des CO₂ und H₂O verflüssigt und teilweise zusammen mit nichtkondensierten Rauchgasbestandteilen abgeführt werden und dass ein nicht abgeführter Hauptanteil flüssigen CO₂ mittels einer Pumpeneinheit (1) komprimiert, in wenigstens einer Rekuperatorstufe (11) vorgewärmt und der Brennkammer (2) erneut zugeführt wird, und der durch die Pumpeneinheit (1) komprimierte Hauptanteil CO₂ auf einen Verbrennungsdruck vorexpandiert wird, mit dem der Hauptanteil CO₂ der Brennkammer (2) zur Verbrennung zugeführt wird, **dadurch gekennzeichnet, dass** der Verbrennungsdruck zwischen 70 bar bis 100 bar beträgt.

2. Verfahren nach Anspruch 1,
**dadurch gekennzeichnet, dass** der durch die Pumpeneinheit (1) komprimierte Hauptanteil CO₂ auf den Verbrennungsdruck vorexpandiert wird, nachdem der komprimierte Hauptanteil CO₂ wenigstens eine Rekuperatorstufe (11) durchlaufen hat.

3. Verfahren nach einem der Ansprüche 1 bis 2,
**dadurch gekennzeichnet, dass** die nach Kompression der durch die Turbinenstufe (3) expandierten Rauchgase (20) gekühlt werden bevor sie dem Kondensator (4) zugeleitet werden.

4. Verfahren nach Anspruch 3,
**dadurch gekennzeichnet, dass** die Kompression und Kühlung der Rauchgase (20) derart erfolgt, dass vor Eintritt der Rauchgase in den Kondensator (4) der Kondensationsbeginn von CO₂ in der unterkritischen Gasphase erreicht wird.

5. Verfahren nach einem der Ansprüche 1 bis 4,
**dadurch gekennzeichnet, dass** die Vorwärmung des komprimierten Hauptanteils CO₂ durch Wärmetausch mit den aus der Turbinenstufe (3) expandiert austretenden Rauchgasen und/oder mit den aus der Verdichterstufe (18) komprimiert austretenden Rauchgasen durchgeführt wird, bevor der komprimierte Hauptanteil CO₂ vorexpandiert wird.

6. Verfahren nach Anspruch 5,
**dadurch gekennzeichnet, dass** die aus der Turbinenstufe (3) expandiert austretenden Rauchgase vor der Kompression durch die Verdichterstufe (18) und/oder die aus der Verdichterstufe (18) komprimiert austretenden Rauchgase vor der Kondensation durch den Kondensator (4) mit zusätzlichen Kühleinheiten (13, 8')gekühlt werden.

7. Verfahren nach einem der Ansprüche 1 bis 6,
**dadurch gekennzeichnet, dass** den aus der Brennkammer (2) austretenden Rauchgasen vor Eintritt in die Turbinenstufe (3) CO₂ zugemischt wird, das eine geringere Temperatur aufweist als die der Rauchgase.

8. Gasturbinenanlage mit CO₂ als Arbeitsmittel, mit wenigstens einer Brennkammer (2), in der Kohlenwasserstoffe zusammen mit Sauerstoff innerhalb einer angereicherten CO₂-Atmosphäre zu Rauchgasen, die vorwiegend aus CO₂ und H₂O bestehen, verbrennbar sind, wenigstens einer der Brennkammer (2) nachgeordneten ersten Turbinenstufe (3), innerhalb der die Rauchgase expandieren, mit wenigstens einer der ersten Turbinenstufe (3) nachgeordneten Verdichterstufe (18) sowie einem der Verdichterstufe nachgeordneten Kondensator (4) mit Abscheideeinheiten (8, 9), durch die Teile des innerhalb des Kondensators verflüssigten CO₂ sowie nicht kondensierte Rauchgasbestandteile abtrennbar sind, mit einer dem Kondensator (4) nachgeordneten Pumpeneinheit (1), die über wenigstens ein Rekuperator (11) mit der Brennkammer (2) verbunden ist, wobei zwischen der Pumpeneinheit (1) und der Brennkammer (2) wenigstens eine zweite Turbinenstufe (22) vorgesehen ist, in der der durch die Pumpeneinheit (1) komprimierte Restanteil CO₂ auf einen Verbrennungsdruck vorexpandierbar ist, unter dem der Restanteil CO₂ der Brennkammer (2) zur Verbrennung zuführbar ist, und die zweite Turbinenstufe (22) nach dem wenigstens einen Rekuperator (11) vor der Brennkammer (2) angeordnet ist, **dadurch gekennzeichnet, dass** der Rekuperator dreistufig aufgebaut ist mit einer ersten Rekuperatorstufe (14) zwischen Verdichterstufe (18) und Kondensator (4), einer zweiten (15) und einer dritten Rekuperatorstufe (11) zwischen der ersten Turbinenstufe (3) und der Verdichterstufe (18).

9. Gasturbinenanlage nach Anspruch 8,
**dadurch gekennzeichnet, dass** die erste (14) und die zweite Rekuperatorstufe (15) parallel zueinander geschaltet sind und die dritte Rekuperatorstufe (11) in Serie zur ersten (14) und zweiten Rekuperatorstufe (15).

10. Gasturbinenanlage nach einem der Ansprüche 8 bis 9,
**dadurch gekennzeichnet, dass** zwischen der ersten Turbinenstufe (3) und der Verdichterstufe (18) sowie zwischen der Verdichterstufe (18) und dem Kondensator (4) jeweils eine Kühlereinheit (13, 8') angeordnet ist.

## Claims

1. Method for operating a gas turbine plant with CO₂ as working medium, in which hydrocarbons are burnt in at least one combustion chamber (2) in an oxygen-enriched CO₂ atmosphere, to form flue gases (21) which predominantly consist of CO₂ and H₂O and which are expanded within at least one turbine stage (3) following the combustion chamber (2), are subsequently compressed in a compressor stage (18) and are at least partially condensed in a following condenser (4), so that at least parts of the CO₂ and H₂O are liquefied and are partially discharged together with non-condensed flue gas constituents, and so that a non-discharged main fraction of liquid CO₂ is compressed by means of a pump unit (1), is preheated in at least one recuperator stage (11) and is supplied anew to the combustion chamber (2), the main fraction of CO₂ compressed by the pump unit (1) being pre-expanded to a combustion pressure at which the main fraction of CO₂ is supplied to the combustion chamber (2) for combustion, **characterized in that** the combustion pressure amounts to between 70 bar and 100 bar.

2. Method according to Claim 1, **characterized in that** the main fraction of CO₂ compressed by the pump unit (1) is pre-expanded to the combustion pressure after the compressed main fraction of CO₂ has run through at least one recuperator stage (11).

3. Method according to either one of Claims 1 and 2, **characterized in that** the flue gases (20) expanded by means of the turbine stage (3), after being compressed, are cooled before they are delivered to the condenser (4).

4. Method according to Claim 3, **characterized in that** the compression and cooling of the flue gases (20) take place in such a way that, before the flue gases enter the condenser (4), the start of condensation of CO₂ is achieved in the subcritical gas phase.

5. Method according to one of Claims 1 to 4,
**characterized in that** preheating of the compressed main fraction of CO₂ is carried out by heat exchange with the flue gases emerging, expanded, from the turbine stage (3) and/or with the flue gases emerging, compressed, from the compressor stage (18), before the compressed main fraction of CO₂ is pre-expanded.

6. Method according to Claim 5, **characterized in that** the flue gases emerging, expanded, from the turbine stage (3) are cooled by means of additional cooling units (13, 8') before compression by the compressor stage (18), and/or the flue gases emerging, compressed, from the compressor stage (18) are cooled by means of additional cooling units (13, 8') before condensation by the condenser (4).

7. Method according to one of Claims 1 to 6,
**characterized in that** CO₂ which has a lower temperature than that of the flue gases is admixed to the flue gases emerging from the combustion chamber (2), before entry into the turbine stage (3).

8. Gas turbine plant with CO₂ as the working medium, with at least one combustion chamber (2) in which hydrocarbons, together with oxygen, can be burnt within an enriched CO₂ atmosphere, to form flue gases which consist predominantly of CO₂ and H₂O, with at least one first turbine stage (3) which follows the combustion chamber (2) and within which the flue gases expand, with at least one compressor stage (18) following the first turbine stage (3), with a condenser (4) following the compressor stage and having separation units (8, 9), by means of which parts of the CO₂ liquefied within the condenser and non-condensed flue-gas constituents can be separated, and with a pump unit (1) which follows the condenser (4) and which is connected to the combustion chamber (2) via at least one recuperator (11), there being provided between the pump unit (1) and the combustion chamber (2) at least one second turbine stage (22) in which the residual fraction of CO₂ compressed by the pump unit (1) can be pre-expanded to a combustion pressure at which the residual fraction of CO₂ can be supplied to the combustion chamber (2) for combustion, and the second turbine stage (22) being arranged downstream of the at least one recuperator (11) and upstream of the combustion chamber (2), **characterized in that** the recuperator is of three-stage construction with a first recuperator stage (14) between the compressor stage (18) and condenser (4), and with a second recuperator stage (15) and third recuperator stage (11) between the first turbine stage (3) and the compressor stage (18).

9. Gas turbine plant according to Claim 8,
**characterized in that** the first recuperator stage (14) and the second recuperator stage (15) are connected in parallel to one another, and the third recuperator stage (11) is in series with the first recuperator stage (14) and second recuperator stage (15).

10. Gas turbine plant according to either one of Claims 8 and 9, **characterized in that** a cooler unit (13, 8') is arranged in each case between the first turbine stage (3) and the compressor stage (18) and between the compressor stage (18) and the condenser (4).

## Revendications

1. Procédé pour faire fonctionner une installation de turbine à gaz utilisant du CO₂ comme fluide de travail, dans lequel, dans au moins une chambre de combustion (2), des hydrocarbures sont brûlés dans une atmosphère de CO₂ enrichie en oxygène pour donner des gaz de fumée (21) qui se composent essentiellement de CO₂ et de H₂O, qui sont détendus à l'intérieur d'au moins un étage de turbine (3) placé en aval de la chambre de combustion (2), puis sont comprimés dans un étage de compresseur (18) et sont au moins en partie condensés dans un condenseur (4) placé en aval, de sorte qu'au moins des parties du CO₂ et du H₂O se liquéfient et soient évacuées ensemble en partie avec des constituants de gaz de fumée n'ayant pas été condensés, et qu'une proportion principale non évacuée du CO₂ liquide soit comprimée au moyen d'une unité de pompe (1), préchauffée dans au moins un étage de récupérateur (11) et ramenée à la chambre de combustion (2), et que la proportion principale de CO₂ comprimée par l'unité de pompe (1) soit pré-détendue à une pression de combustion avec laquelle la proportion principale de CO₂ est acheminée à la chambre de combustion (2) en vue de sa combustion, **caractérisé en ce que** la pression de combustion est comprise entre 70 bars et 100 bars.

2. Procédé selon la revendication 1,
**caractérisé en ce que** la proportion principale de CO₂ comprimée par l'unité de pompe (1) est pré-détendue à la pression de combustion, après que la proportion principale de CO₂ comprimée soit passée à travers au moins un étage de récupération (11).

3. Procédé selon l'une quelconque des revendications 1 à 2,
**caractérisé en ce que** les gaz de fumée (20) détendus après la compression à travers l'étage de turbine (3) sont refroidis avant d'être acheminés au condenseur (4).

4. Procédé selon la revendication 3,
**caractérisé en ce que** la compression et le refroidissement des gaz de fumée (20) s'effectuent de telle sorte qu'avant l'entrée des gaz de fumée dans le condenseur (4), le début de la condensation du CO₂ dans la phase gazeuse sous-critique soit atteint.

5. Procédé selon l'une quelconque des revendications 1 à 4,
**caractérisé en ce que** le préchauffage de la proportion principale de CO₂ comprimée est effectué par échange thermique avec les gaz de fumée sortant sous forme détendue de l'étage de turbine (3) et/ou avec les gaz de fumée sortant sous forme comprimée de l'étage de compresseur (18), avant que la proportion principale de CO₂ comprimée ne soit pré-détendue.

6. Procédé selon la revendication 5,
**caractérisé en ce que** les gaz de fumée sortant sous forme détendue de l'étage de turbine (3) sont refroidis avant la compression par l'étage de compresseur (18) et/ou les gaz de fumée sortant sous forme comprimée de l'étage de compresseur (18) sont refroidis avant la condensation par le condenseur (4), avec des unités de refroidissement supplémentaires (13, 8').

7. Procédé selon l'une quelconque des revendications 1 à 6,
**caractérisé en ce que** l'on mélange aux gaz de fumée sortant de la chambre de combustion (2), avant leur entrée dans l'étage de turbine (3), du CO₂ qui présente une température inférieure à celle des gaz de fumée,

8. Installation de turbine à gaz utilisant du CO₂ comme fluide de travail, comprenant au moins une chambre de combustion (2), dans laquelle des hydrocarbures conjointement avec de l'oxygène peuvent être brûlés dans une atmosphère de CO₂ enrichie pour donner des gaz de fumée qui se composent essentiellement de CO₂ et de H₂O, au moins un premier étage de turbine (3) disposé en aval de la chambre de combustion (2), à l'intérieur duquel les gaz de fumée se détendent, au moins un étage de compresseur (18) disposé en aval du premier étage de turbine (3), ainsi qu'un condenseur (4) disposé en aval de l'étage de compresseur, avec des unités de séparation (8, 9) qui permettent de séparer des parties du CO₂ liquéfié à l'intérieur du condenseur, ainsi que des constituants des gaz de fumée non condensés, une unité de pompe (1) disposée en aval du condenseur (4), qui est connectée par le biais d'au moins un récupérateur (11) à la chambre de combustion (2), au moins un deuxième étage de turbine (22) étant prévu entre l'unité de pompe (1) et la chambre de combustion (2), dans lequel la proportion résiduelle de CO₂ comprimée par l'unité de pompe (1) peut être pré-détendue à une pression de combustion, à laquelle la proportion résiduelle de CO₂ peut être acheminée à la chambre de combustion (2) en vue de sa combustion, et le deuxième étage de turbine (22) étant disposé après l'au moins un récupérateur (11) avant la chambre de combustion (2), **caractérisée en ce que** le récupérateur est construit en trois étages, avec un premier étage de récupérateur (14) entre l'étage de compresseur (18) et le condenseur (4), un deuxième (15) et un troisième étage de récupérateur (11) entre le premier étage de turbine (3) et l'étage de compresseur (18).

9. Installation de turbine à gaz selon la revendication 8,
**caractérisée en ce que** le premier (14) et le deuxième étage de récupérateur (15) sont montés parallèlement l'un à l'autre et le troisième étage de récupérateur (11) est monté en série par rapport au premier (14) et au deuxième étage de récupérateur (15).

10. Installation de turbine à gaz selon l'une quelconque des revendications 8 à 9,
**caractérisée en ce qu'**entre le premier étage de turbine (3) et l'étage de compresseur (18) ainsi qu'entre l'étage de compresseur (18) et le condenseur (4) est disposée à chaque fois une unité de refroiditsement (13, 8').
